# EUROPEAN PATENT APPLICATION

(11) **EP 3 484 130 A1**
(43) Date of publication of application: **15.05.2019**
(21) Application number: 17919110.1
(22) Date of filing: 25.07.2017
(51) Int. Cl.: H04M 1/00, G08B 21/04, G08B 25/04, H04M 11/04

(54) **VOICE MESSAGE COMMUNICATION DEVICE**

(71) Applicant: E3 Co., Ltd., Shinjuku-Ku Tokyo 1630532 (JP)
(72) Inventor: YAO Bingwei, Tokyo 163-0532 (JP)
(74) Representative: Vossius & Partner Patentanwälte Rechtsanwälte mbB
(86) International application number: PCT/JP2017/026752
(87) International publication number: WO 2019/021357

(57) **Abstract**

A voice message communication apparatus 10 has a sensor unit 12 that detects at least one of a surrounding situation of the communication apparatus and a situation of the communication apparatus itself. A voice message transmission unit 14 transmits voice data regarding a desired voice message to a contact point terminal 40 in response to a voice message transmission instruction from a user, and a sensor information transmission unit 15 transmits sensor information detected by the sensor unit 12 to the contact point terminal 40. As a result, it is possible to transmit the sensor information necessary for monitoring or the like along with the voice message while an elderly person living alone uses the voice message communication apparatus 10 with a light feeling that the elderly person living alone simply transmits a voice message.

## Description

### Technical Field

The present invention relates to a voice message communication apparatus, and particularly, to a voice message communication apparatus suitable for use of elderly people living alone.

### Background Art

In recent years, elderly people living alone are increasing. Under such a circumstance, a safety confirmation system has been widely provided, in which safety is confirmed by monitoring a behavior of an elderly person by using a sensor, and notification is made in the event of an abnormality, emergency, or the like. For example, a system is known which analyzes a life rhythm unique to an elderly person living alone on the basis of the use amount of gas or electricity and automatically notifies to a designated contact point when it is determined that an abnormality occurs. In addition, a system is also known which automatically notifies a designated contact point when a human detection sensor installed in a toilet, a bedroom, or the like does not respond for a long time.

A monitoring system for watching over a daily living situation or a health status of an elderly person living alone is also provided, in which various sensors such as a motion sensor, a temperature sensor, a humidity sensor, an illuminance sensor, and a human detection sensor are installed in the elderly person's home, and information detected by various sensors is transmitted to a designated contact point periodically or in response to a request from the contact point.

Further, a wrist worn type mobile terminal device is also known, in which a pulse value, a heart rate, and a blood pressure are monitored on the basis of detection results of sensors, and a document/voice message is automatically created by adding GPS data to information regarding an abnormality and is delivered to a counterpart via an e-mail and a voice call in the event of an abnormality in at least any of such values, so that a user's health problem is notified wherever the user is placed (for example, see Patent Document 1).

Patent Document 1: JP-A-2007-54241

### Disclosure of the Invention

Such a safety confirmation system, monitoring system, or mobile terminal device described in Patent Document 1 may be a system that can confirm safety by introducing it for families of the elderly person living alone, that is, those who watch over. However, some elderly people living along who are watched over may feel a psychological resistance to introduction and use. In addition, there are many people who feel a stress that they are continuously monitored. This makes it difficult to introduce such a system. Some elderly people living alone may refuse to use even when the system is introduced by the intention of the family, which was disadvantageous.

In view of such problems, an object of the invention is to notify detection information of various sensors to a designated contact point without significantly generating a psychological resistance or stress for elderly people living alone.

In order to address the aforementioned problem, according to the invention, a voice message communication apparatus for transmitting a voice message has a sensor unit configured to detect at least one of a surrounding situation of the communication apparatus and a situation of the communication apparatus itself, and sensor information detected by the sensor unit is transmitted along with voice data regarding a desired voice message in response to a voice message transmission instruction from a user.

According to the invention having the configuration described above, when a voice message is transmitted in response to a transmission instruction from an elderly person living alone using a voice message communication apparatus used as a general communication means, sensor information is transmitted along with the voice message. For this reason, it is possible to transmit the sensor information necessary for monitoring or the like along with the voice message while an elderly person living alone uses the voice message communication apparatus with a light feeling that the elderly person living alone simply transmits a voice message. As a result, it is possible to notify the sensor information to the designated contact point without significantly generating a psychological resistance or stress for elderly people living alone.

### Brief Description of the Drawings

Fig. 1 is a diagram illustrating an exemplary configuration of a communication system having a voice message communication apparatus according to an embodiment.
Fig. 2 is a block diagram illustrating an exemplary functional configuration of the voice message communication apparatus according to the embodiment.
Fig. 3 is a block diagram illustrating another exemplary functional configuration of the voice message communication apparatus according to the embodiment.
Fig. 4 is a flowchart illustrating an exemplary operation of the voice message communication apparatus of Fig. 3.

### Best Mode for Carrying Out the Invention

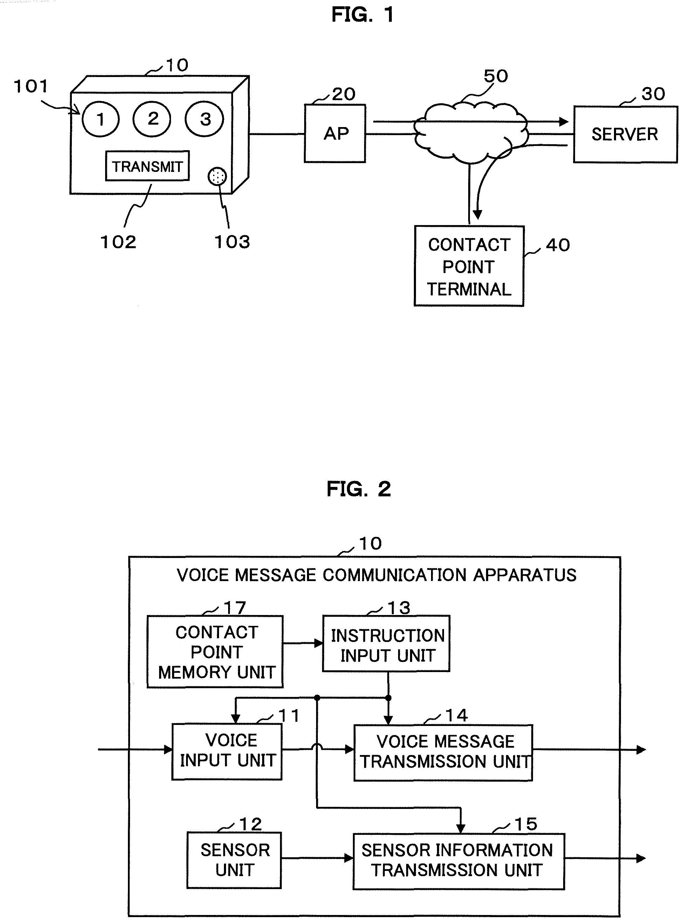

An embodiment of the invention will now be described with reference to the accompanying drawings. Fig. 1 is a diagram illustrating an exemplary configuration of a communication system having a voice message communication apparatus according to this embodiment. As illustrated in Fig. 1, the communication system according to this embodiment includes a voice message communication apparatus 10 according to this embodiment, a wireless LAN access point (hereinafter, referred to as "AP") 20, a server 30, and a contact point terminal 40. Connection between the AP 20 and the server 30 and connection between the server and the contact point terminal 40 are established via a communication network such as the Internet.

The voice message communication apparatus 10 according to this embodiment is a communication apparatus for transmitting a voice message. The voice message communication apparatus 10 is connected to the AP 20 via the wireless LAN to wirelessly transmit voice data regarding a speaker voice input by a user to the AP 20 as a voice message. The AP 20 transmits the voice message received from the voice message communication apparatus 10 to the server 30, and the server 30 transmits the voice message from the AP 20 to a designated contact point terminal 40.

The voice message communication apparatus 10 according to this embodiment is suitable for use by an elderly person living alone. In addition, the contact point terminal 40 is, for example, a terminal used by a family member of the elderly person living alone. The contact point terminal 40 may include, for example, a smart phone, a tablet computer, or a personal computer. Alternatively, the contact point terminal 40 may include an information appliance such as a television receiver connectable to the Internet.

The voice message communication apparatus 10 has a plurality of preset buttons 101, a transmission button 102, and a microphone 103. The preset button 101 is a button for allowing a user to instruct designation of a previously registered contact point. In the example of Fig. 1, three preset buttons 101 are provided, and up to three contact points corresponding to each preset button 101 are registered in an internal preset memory. Information of the contact point registered in the preset memory includes at least address information indicating a destination of data. As a user (elderly person living alone) manipulates any one of the preset buttons 101, it is possible to designate a desired contact point as a counterpart to which the voice message is transmitted.

The transmission button 102 is a button for allowing a user to instruct transmission of a voice message. When a user designates a desired contact point by manipulating the preset button 101 and then manipulates the transmission button 102 to instruct transmission of the voice message, the voice data regarding the user's speaker voice input from the microphone 103 after manipulating the transmission button 102 is transmitted to the server 30 via the AP 20 as a voice message along with the contact point information of the contact point designated by manipulating the preset button 101. The server 30 transmits the voice message received from the voice message communication apparatus 10 to the contact point terminal 40 indicated by the address information contained in the contact point information received from the voice message communication apparatus 10.

Note that, when the user manipulates the transmission button 102, and then manipulates the transmission button 102 again, the voice message transmission processing is terminated. That is, a voice message transmission mode is executed from the first manipulation of the transmission button 102 to the second manipulation of the transmission button 102, so that the speaker voice input from the microphone 103 during that period is transmitted to the contact point terminal 40 as a voice message. However, this is just an example. For example, the voice message transmission mode may be executed while the user presses the transmission button 102. Alternatively, the voice message transmission mode may be executed during a certain period of time after manipulation of the transmission button 102.

According to this embodiment, when the voice message is transmitted from the voice message communication apparatus 10 to the contact point terminal 40 as described above, sensor information detected by various sensors (not illustrated in Fig. 1) provided in the voice message communication apparatus 10 is transmitted together with the voice message. For example, the sensor information detected by various sensors when the transmission button 102 is manipulated is transmitted from the voice message communication apparatus 10 to the contact point terminal 40 along with the voice message.

Here, how to transmit the voice message and the sensor information does not matter. For example, the voice message input during the voice message transmission mode can be sequentially transmitted after the sensor information detected when the transmission button 102 is manipulated is first transmitted. Alternatively, the sensor information may be transmitted when the voice message transmission mode is terminated after the voice message input during the voice message transmission mode is sequentially transmitted.

Fig. 2 is a block diagram illustrating an exemplary functional configuration of the voice message communication apparatus 10 according to this embodiment. As illustrated in Fig. 2, the voice message communication apparatus 10 according to this embodiment includes, as its functional components, a voice input unit 11, a sensor unit 12, an instruction input unit 13, a voice message transmission unit 14, a sensor information transmission unit 15, and a contact point memory unit 17.

Here, each of the functional blocks of the voice input unit 11, the instruction input unit 13, the voice message transmission unit 14, and the sensor information transmission unit 15 can be configured by any one of hardware, a digital signal processor (DSP), and software. For example, in a case where the functional blocks are configured by software, each of such functional blocks includes, in practice, a CPU, a RAM, a RAM, or the like of a computer, and is implemented by operating a program stored in the RAM, the ROM, or a recording medium such as a hard disk or a semiconductor memory.

The contact point memory unit 17 stores the contact point of the voice message as preset information and corresponds to the preset memory described above. The voice input unit 11 inputs a user's speaker voice from the microphone 103. The voice input unit 11 inputs a speaker voice from the microphone 103 while the voice message transmission mode is set by manipulating the transmission button 102.

The sensor unit 12 detects at least one of a surrounding situation of the voice message communication apparatus 10 and a situation of the voice message communication apparatus 10 itself. For example, the sensor unit 12 includes at least any one of a temperature sensor, a humidity sensor, an illuminance sensor, an atmospheric pressure sensor, a geomagnetic sensor, and an acoustic sensor as a sensor for detecting the surrounding situation of the voice message communication apparatus 10. In addition, the sensor unit 12 includes at least any one of an acceleration sensor, an angular velocity sensor, a gravity sensor, and a current-position detection sensor as a sensor for detecting the situation of the voice message communication apparatus 10 itself.

The instruction input unit 13 inputs an instruction from a user regarding designation of the contact point as a transmission counterpart of the voice message and transmission of the voice message. That is, the instruction input unit 13 inputs information regarding a contact point designation instruction by manipulating the preset button 101 and a voice message transmission instruction by manipulating the transmission button 102.

The voice message transmission unit 14 transmits the voice data regarding a desired voice message input from the microphone 103 to the contact point terminal 40 via the AP 20 and the server 30 in response to a transmission instruction from a user input by the instruction input unit 13. At this time, the voice message transmission unit 14 transmits the voice message to the designated contact point terminal 40 in response to the contact point designation instruction input by the instruction input unit 13.

The sensor information transmission unit 15 transmits the sensor information detected by the sensor unit 12 along with the voice data regarding the voice message transmitted from the voice message transmission unit 14 in response to the voice message transmission instruction from a user input by the instruction input unit 13. Here, the sensor information transmission unit 15 transmits the sensor information along with the voice data regarding the voice message only when the voice message transmission instruction is issued.

The sensor unit 12 detects at least one of a surrounding situation (such as temperature, humidity, illuminance, atmospheric pressure, geomagnetism, and ambient sound) of the voice message communication apparatus 10 and a situation (such as acceleration, angular velocity, gravity, and current location) of the voice message communication apparatus 10 itself at all times. However, the sensor information detected by the sensor unit 12 at all times is not transmitted to the contact point terminal 40 at all times, but the sensor information is transmitted only when the voice message transmission instruction is issued.

That is, according to this embodiment, the voice message transmission unit 14 transmits the voice message, and the sensor information transmission unit 15 transmits the sensor information when the voice message transmission instruction is issued by designating a contact point stored in the contact point memory unit 17. As a result, the sensor information is not transmitted to the contact point terminal 40 unless the voice message is transmitted by a user's intention. Therefore, it is possible to prevent a user from feeling a stress caused by constant monitoring.

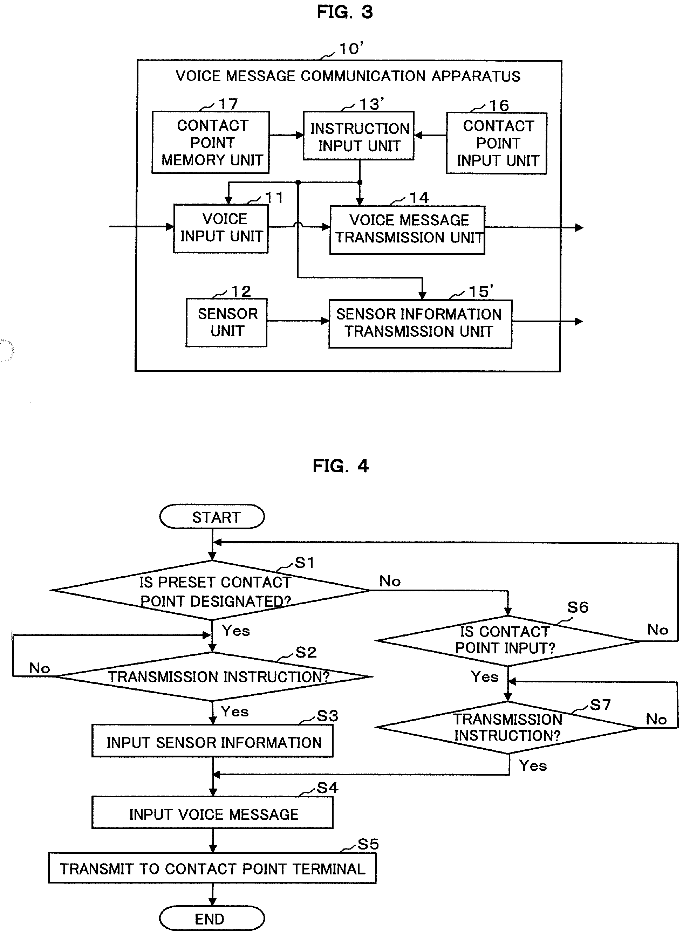

Note that, although an example in which the voice message is transmitted to the contact point stored in the contact point memory unit 17 as preset information has been described in the aforementioned embodiment, the voice message may be transmitted by designating a contact point not included in the preset information. Fig. 3 illustrates an exemplary functional configuration of a voice message communication apparatus 10' in this case. Note that, in Fig. 3, like reference numerals denote like elements as in Fig. 2, and herein, they will not be described repeatedly.

As illustrated in Fig. 3, the voice message communication apparatus 10' further includes a contact point input unit 16 as its functional configuration in addition to the configuration of Fig. 2. In addition, the voice message communication apparatus 10' includes an instruction input unit 13' and a sensor information transmission unit 15' instead of the instruction input unit 13 and the sensor information transmission unit 15 of Fig. 2.

The contact point input unit 16 inputs contact point information regarding a desired contact point as a transmission counterpart of the voice message as a user manipulates the voice message communication apparatus 10' . In order to receive such a user's manipulation, the voice message communication apparatus 10' has a manipulation device such as a touch panel. Note that, designation of the contact point by manipulating the touch panel includes, for example, selection of any one of a plurality of contact points registered in an address list different from that of the preset information.

The instruction input unit 13' inputs an instruction from a user regarding designation of the contact point as a transmission counterpart of the voice message and transmission of the voice message. Here, for the contact point, the instruction input unit 13' inputs information regarding any one of the contact point designation instruction by manipulating the preset button 101 and the contact point designation instruction from the contact point input unit 16 by manipulating the touch panel.

The sensor information transmission unit 15' transmits the sensor information along with the voice message only when the contact point is designated by manipulating the preset button 101, and the voice message transmission instruction is issued. That is, in the exemplary configuration of Fig. 3, when the contact point stored in the contact point memory unit 17 is designated, and the voice message transmission instruction is issued, transmission of the voice data regarding the voice message from the voice message transmission unit 14 and transmission of the sensor information from the sensor information transmission unit 15' are executed. Meanwhile, when the voice message transmission instruction is issued without designating a contact point stored in the contact point memory unit 17, only transmission of the voice data regarding the voice message from the voice message transmission unit 14 is executed.

In this manner, for example, when the voice message is transmitted to a user's friend or the like, the contact point is designated by manipulating the touch panel, and only the voice message is transmitted. Meanwhile, when the voice message is transmitted to a user's family member, the contact point is designated by pressing the preset button 101, and the sensor information is transmitted along with the voice message. As a result, it is possible to give a user a relief feeling because the sensor information is transmitted only to a specific person for the user.

Fig. 4 is a flowchart illustrating an exemplary operation of the voice message communication apparatus 10' configured as in Fig. 3. In the flowchart of Fig. 4, it is assumed that the process starts as the voice message communication apparatus 10' is powered on, and the process is repeatedly executed until the voice message communication apparatus 10' is powered off.

First, the instruction input unit 13' determines whether or not the contact point designation instruction is issued by manipulating the preset button 101 (step S1). In a case where the contact point designation instruction is issued by manipulating the preset button 101, the instruction input unit 13' subsequently determines whether or not the voice message transmission instruction is issued by manipulating the transmission button 102 (step S2).

Here, if the instruction input unit 13' determines that the voice message transmission instruction is issued, the sensor information transmission unit 15' inputs the sensor information detected by the sensor unit 12 (step S3), and the voice input unit 11 inputs a user's speaker voice from the microphone 103 and supplies it to the voice message transmission unit 14 (step S4). In addition, the voice message transmission unit 14 transmits the voice data regarding the speaker voice input from the voice input unit 11 to the contact point terminal 40 as a voice message, and the sensor information transmission unit 15' transmits the sensor information input from the sensor unit 12 to the contact point terminal 40 (step S5). As a result, the processing of the flowchart of Fig. 4 is terminated.

In a case where the instruction input unit 13' determines that the contact point designation instruction is not issued by manipulating the preset button 101 in step S1 described above, the instruction input unit 13' subsequently determines whether or not the contact point is input by manipulating the touch panel (step S6). In a case where the contact point is also not input by manipulating the touch panel, the process returns to step S1.

Meanwhile, in a case where the instruction input unit 13' determines that the contact point is input by manipulating the touch panel, the instruction input unit 13' subsequently determines whether or not the voice message transmission instruction is issued by manipulating the transmission button 102 (step S7).

Here, if the instruction input unit 13' determines that the voice message transmission instruction is issued, the voice input unit 11 inputs the user's speaker voice from the microphone 103 and supplies it to the voice message transmission unit 14 (step S4). In addition, the voice message transmission unit 14 transmits the voice data regarding the speaker voice input from the voice input unit 11 to the contact point terminal 40 as a voice message (step S5). As a result, the processing of the flowchart of Fig. 4 is terminated.

As described above in details, according to this embodiment, the voice message communication apparatus 10 (or 10') for transmitting a voice message has the sensor unit 12 that detects at least one of the surrounding situation of the communication apparatus and the situation of the communication apparatus itself, and the sensor information detected by the sensor unit 12 is transmitted to the contact point terminal 40 along with the voice data regarding a desired voice message in response to the voice message transmission instruction from a user.

According to this embodiment configured as described above, when the voice message used as a general communication means is transmitted in response to a transmission instruction from an elderly person living alone, the sensor information is transmitted to the contact point terminal 40 along with the voice message. For this reason, it is possible to transmit the sensor information necessary for monitoring or the like to the contact point terminal 40 along with the voice message while an elderly person living alone uses the voice message communication apparatus 10 or 10' with a light feeling that an elderly person living alone simply transmits a voice message. As a result, it is possible to notify the sensor information to the designated contact point without significantly generating a psychological resistance or stress for elderly people living alone.

Note that, although an example in which the voice message transmission instruction from a user is issued by manipulating the transmission button 102 has been described in the aforementioned embodiment, the invention is not limited thereto. For example, the voice message transmission instruction may be issued by inputting a voice command from the microphone 103.

In addition, in the aforementioned embodiment, an example in which the sensor information is transmitted along with the voice message when the contact point registered as preset information is designated, and only the voice message is transmitted when the contact point other than the preset information is designated has been described. However, the invention is not limited thereto. For example, the sensor information may be transmitted along with the voice message when a contact point regarding a specific piece of preset information out of a plurality of pieces of preset information is designated. In addition, only the voice message may be transmitted when a contact point regarding the other pieces of preset information is designated.

Note that, although an example in which the voice message and the sensor information are transmitted via a wireless LAN has been described in the aforementioned embodiment, the invention is not limited thereto. For example, the voice message and the sensor information may be transmitted using other radio communication means such as a Bluetooth (registered trademark) or a wired communication means such as a wired LAN.

In addition, although an example in which the speaker voice input from the microphone 103 while the voice message transmission mode is set by manipulating the transmission button 102 is transmitted as a voice message has been described in the aforementioned embodiment, the invention is not limited thereto. For example, a record button may be provided in the voice message communication apparatus 10 or 10', the speaker voice input from the microphone 103 may be recorded in an internal memory while a record mode is set by manipulating the record button. Then, the recorded speaker voice may be transmitted as a voice message when the transmission button 102 is manipulated at any timing.

While the embodiments have been described just for exemplary implementations of the invention, they are not construed as a limitation of the technical scope of the invention. That is, various changes or alterations may be possible without departing from the spirit and scope of the invention.

### Reference Signs List

- 10, 10': Voice message communication apparatus
- 11: Voice input unit
- 12: Sensor unit
- 13, 13': Instruction input unit
- 14: Voice message transmission unit
- 15, 15': Sensor information transmission unit
- 16: Contact point input unit
- 17: Contact point memory unit

## Claims

1. A voice message communication apparatus for transmitting a voice message, comprising:
a voice message transmission unit configured to transmit voice data regarding a desired voice message in response to a voice message transmission instruction from a user;
a sensor unit configured to detect at least one of a surrounding situation of the communication apparatus and a situation of the communication apparatus itself; and
a sensor information transmission unit configured to transmit sensor information detected by the sensor unit along with the voice data regarding the voice message in response to the voice message transmission instruction.

2. The voice message communication apparatus according to claim 1, wherein the sensor information transmission unit transmits the sensor information along with the voice data regarding the voice message only when the voice message transmission instruction is issued.

3. The voice message communication apparatus according to claim 1 or 2, further comprising a contact point memory unit configured to store a contact point of the voice message as preset information,
wherein transmission of the voice data from the voice message transmission unit and transmission of the sensor information from the sensor information transmission unit are executed when the voice message transmission instruction is issued by designating the contact point stored in the contact point memory unit.

4. The voice message communication apparatus according to claim 3, wherein transmission of the voice data from the voice message transmission unit and transmission of the sensor information from the sensor information transmission unit are executed in a case where the voice message transmission instruction is issued by designating the contact point stored in the contact point memory unit, and
only transmission of the voice data from the voice message transmission unit is executed in a case where the voice message transmission instruction is issued without designating the contact point stored in the contact point memory unit.

5. The voice message communication apparatus according to claim 3, wherein transmission of the voice data from the voice message transmission unit and transmission of the sensor information from the sensor information transmission unit are executed in a case where the voice message transmission instruction is issued by designating a specific contact point out of a plurality of contact points stored in the contact point memory unit, and
only transmission of the voice data from the voice message transmission unit is executed in a case where the voice message transmission instruction is issued by designating a contact point other than the specific contact point.

6. The voice message communication apparatus according to any one of claims 1 to 5, wherein the sensor unit includes at least any one of a temperature sensor, a humidity sensor, an illuminance sensor, an atmospheric pressure sensor, a geomagnetic sensor, and an acoustic sensor to detect a surrounding situation of the communication apparatus.

7. The voice message communication apparatus according to any one of claims 1 to 6, wherein the sensor unit includes at least any one of an acceleration sensor, an angular velocity sensor, a gravity sensor, and a current-position detection sensor to detect the situation of the communication apparatus itself.
